# EUROPEAN PATENT SPECIFICATION

(11) **EP 1 974 521 B1**
(45) Date of publication and mention of the grant of the patent: **31.07.2019**
(21) Application number: 06844865.3
(22) Date of filing: 05.12.2006
(51) Int. Cl.: H04L 29/08

(54) **METHOD FOR CONFIGURING AN ELECTRONIC DEVICE**
VERFAHREN ZUM KONFIGURIEREN EINER ELEKTRONISCHEN ANORDNUNG
PROCÉDÉ POUR LA CONFIGURATION D'UN DISPOSITIF ÉLECTRONIQUE

(30) Priority: 03.01.2006 US 325394
(43) Date of publication of application: 01.10.2008
(73) Proprietor: Symbol Technologies, LLC, Holtsville, NY 11742 (US)
(72) Inventor: BHELLA, Ken, Stony Brook, New York 11790 (US); PANG, Robert James, Williston Park, New York 11596 (US); LIEB, Robert J., Central Islip, New York 11722 (US); AKER, Wynn, Manorville, NY 11949 (US)
(74) Representative: LKGLOBAL Lorenz & Kopf PartG mbB Patentanwälte
(86) International application number: PCT/US2006/046475
(87) International publication number: WO 2007/081457

(56) References cited:
- US-A- 5 842 039
- US-A- 6 029 155
- US-A1- 2005 278 461
- US-B1- 6 484 216

## Description

### Field of Invention

The present invention relates generally to systems and methods for configuring electronic devices.

### Background Information

When a peripheral device is coupled to a host device, the peripheral device will utilize a predetermined communication protocol to interface with the host device. However, the protocol may not support configuration of the peripheral device either directly with predefined commands or indirectly with encapsulated commands in the protocol. For example, the protocol may not be capable of transmitting configuration data to the peripheral device. To establish a communication link between the peripheral device and the host device which provides for transmission of the configuration data, the peripheral device must switch communication protocols. This is conventionally done manually. For example, a scanner coupled to a computer would have to scan one or more bar codes to switch to establish the communication link and then scan one or more further bar codes to obtain the configuration data.

US 6 029 155 A discloses a configurable peripheral management system that includes a peripheral management device which comprises a microprocessor for executing peripheral management instructions stored in a persistent memory for performing operations such as polling a peripheral device.

US 5 842 039 A describes a method to be used with a programmable controller that can communicate with peripheral devices.

US6484216B1 discloses a peripheral connected to a computer, the peripheral comprising an interface adapter to be controlled to use a selected communications protocol.

The peripheral device is typically manually configured with settings input by an installer. Attempts by untrained personnel to accomplish hardware and software installation of the peripheral device may result in wasted time, un-needed repair requests when the peripheral device is working properly but has been installed incorrectly, etc. Costs are also incurred when outside personnel (e.g., IT staff) are contracted to install, configure and troubleshoot the peripheral devices.

### Summary of the Invention

The present invention relates to a method for configuring an electronic device according to claim 1. Preferential embodiments are set down in the dependent claims.

### Brief Description of the Drawings

Fig. 1 shows an exemplary embodiment of a system for configuring an electronic device according to the present invention; and
Fig. 2 shows an exemplary embodiment of a method for configuring an electronic device according to the present invention.

### Detailed Description

The present invention may be further understood with reference to the following description and the appended drawings, wherein like elements are provided with the same reference numerals. The present invention is related to a system and method for automating a process of establishing communication between a host device and a peripheral device. In the exemplary embodiments, the present invention will be described with reference to installing and configuring the peripheral device in a point-of-service/sale environment. However, those of skill in the art will understand that the present invention may be implemented in any computing environment in which one or more peripheral devices are coupled to the host device including, but not limited to industrial, warehouse, manufacturing and healthcare environments.

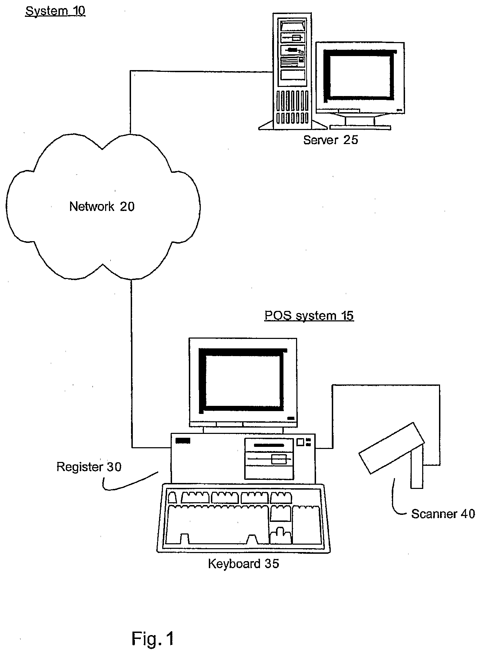

Fig. 1 shows an exemplary embodiment of a system 10 for configuring an electronic device according to the present invention. In the exemplary embodiment, the system 10 is implemented in a retail store having a plurality of point-of-service/sale (POS) systems (e.g., a POS system 15) which may communicate with a server 25 via a communications network 20 (e.g., a wired/wireless LAN, Ethernet, token-ring, frame relay, etc.). In operation, the server 25 may fulfill data requests from the POS system 15 when, for example, the POS system 15 transmits a price request for an item identified during a checkout. Those of skill in the art will understand that the POS system 15 may be utilized in an assisted-checkout manner (i.e., store employee scanning items and processing payment) and/or in a self-checkout manner (i.e., customer scans items and processes payment).

The POS system 15 comprises a host device (e.g., a register 30, a computer) and one or more peripheral devices coupled thereto, e.g., a keyboard 35, a scanner 40, a display, a keypad, a mouse, a printer, a magnetic strip/smart card interface, an image-based scanner, a laser-based scanner, a linear CCD-scanner, a contact scanner, an RFID reader and a magnetic strip reader, etc. The host device may be a stand alone register, computer, thin client device, network-bootable device, mobile device, etc. In the exemplary embodiment, the register 30 may be a PC, laptop or other computing unit which includes an operating system, applications and drivers and is enabled for communication on the network 20. That is, the register 30 may include an Ethernet port for communicating on a LAN, a radio frequency transceiver for communicating on a wireless LAN, and/or other network connection. The register 30 further includes one or more host-peripheral interfaces for coupling to the peripheral device(s). The hardware port used for attaching each of the peripheral devices may be selected based on a corresponding interface used thereby. For example, the keyboard 35 and the scanner 40 may connect to USB ports or Bluetooth® connections on the register 30, while the printer and the display may utilize RS-232 ports. While the exemplary embodiment will be described with reference to the USB ports, those of skill in the art will understand that the present invention may be implemented for any host device with at least one host-peripheral interface.

As is common in retail environments, the peripheral devices are interchangeably used with the POS system 15. For example, the peripheral devices may be added, removed, reinstalled, upgraded, temporarily removed for maintenance, etc. To save costs, a retail store operator may ask a store employee to install and configure the peripheral devices. The installation typically requires a hardware connection (e.g., via the hardware port) and a software connection (e.g., installing a driver for the peripheral device on the register 30). The software connection may also require configuring software settings, e.g., drive mapping, data routing, etc. An untrained employee may encounter several problems with these tasks, requiring help from in-house or contracted IT personnel. In either instance, costs are incurred by the retail store operator, because manual installation of the peripheral device requires technical understanding which a typical store employee may not possess.

According to the present invention, the POS system 15 includes an application or a driver, embodied in software and/or hardware, which controls configuration of the peripheral device. In the exemplary embodiment, the driver detects the connection of peripheral devices to the register 30. When the driver detects that the peripheral device utilizes a first communication protocol, the driver transmits an instruction to the peripheral device to reconfigure itself for use with a second communication protocol. In the exemplary embodiment, the first protocol does not support configuration of the peripheral device (e.g., the scanner 40) either directly with predefined commands or indirectly by encapsulation of the predefined commands in the first protocol. The second protocol supports the configuration of the peripheral device, as will be further described below. While the exemplary embodiment describes the application as residing in the driver, those of skill in the art will understand that the application may reside within the register 30, outside of the driver, at the server 25, on a removable storage medium, etc.

As is known in the art, when the peripheral device (e.g., the scanner 40) is coupled to the register 30 (via the USB port), the register 30 requests that the scanner 40 describe itself by supplying enumeration data. While the exemplary embodiment will be described with reference to the scanner 40, those of skill in the art will understand that the other embodiments may reference any of the peripheral devices described herein and/or commonly known in the art. The enumeration data may be included in a series of fields which are defined in the host-peripheral interface, e.g., a USB standard or a Bluetooth® standard. The enumeration data provided in, for example, a device-class field, a device-subclass field and/or a device-protocol field is used by the register 30 to determine whether the scanner 40 is utilizing the first protocol, and, thus, should be instructed to reconfigure itself to utilize the second protocol.

The register 30 may utilize conventional host-side USB software to determine the communication protocol utilized by the scanner 40. That is, the USB standard defines several device-class types such as, for example, a "mass-storage device", a "human interface device (HID)", etc. In the exemplary embodiment, the register 30 determines the communication protocol used by the scanner 40 based on the enumeration data provided thereby. For example, the enumeration data from the scanner 40 may be indicative of a "USB HID keyboard wedge device" which utilizes the first protocol, preventing automated out-of-the-box configuration of the scanner 40. That is, the scanner 40 would have to scan one or more bar codes to switch to the second protocol which enables automated configuration.

According to the present invention, the driver monitors a bus (e.g., a USB bus) in the register 30 to determine when the scanner 40 has been plugged into the USB port and/or powered up. I As noted above, the driver may monitor connections on any host-peripheral interface, and the USB bus is simply an example thereof. When the driver determines that the scanner 40 is enumerated as a device using the first protocol, it transmits a command which, when received by the scanner 40, instructs the scanner 40 to reconfigure itself to re-identify itself as a peripheral device which utilizes the second protocol, which supports configuration of the scanner 40. After the scanner 40 has switched to the second protocol, it may automatically download its settings from the register 30. The download may also be driven by the register 30 and/or a command sent over the network 20. This may eliminate the manual configuration described above.

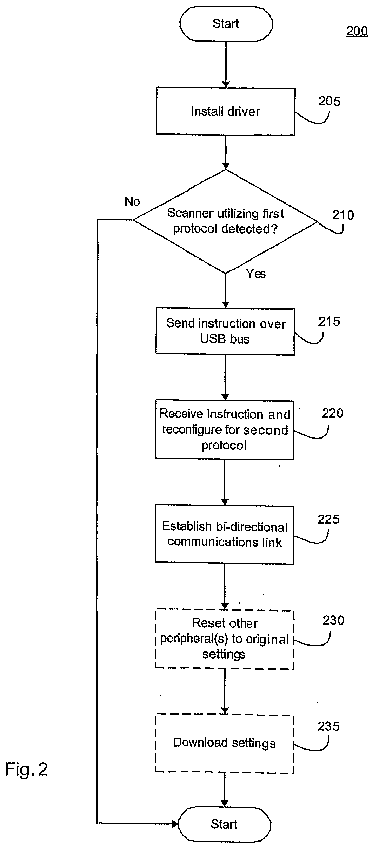

Fig. 2 shows an exemplary embodiment of a method 200 according to the present invention. In step 205, the driver is installed on the register 30 in any conventional manner. That is, the driver may be installed from a removable storage medium (e.g., floppy, CD/DVD, pen drive, etc.) or downloaded from the server 25. In the exemplary embodiment, the driver detects when the peripheral device(s) enumerate on the USB bus.

In step 210, the driver determines whether a peripheral device using the first protocol has been coupled to the register 30. In the exemplary embodiment, the driver monitors the enumerations on the host-peripheral interface. As stated above, after the scanner 40 is coupled to the register 30, the enumeration data of the scanner 40 is requested by the register 30. Using the enumeration data in the device-class, device-subclass and/or device-protocol fields, the driver determines whether the scanner 40 is using the first protocol. If the scanner 40 utilizes the first protocol, the register 30 will establish a communication link with the scanner 40 according to the first protocol, which does not support means for configuring the scanner 40.

When the enumeration data indicates that the scanner 40 utilizes the first protocol, the process proceeds to step 215 where the driver initiates reconfiguration of the scanner 40. In the exemplary embodiment, the driver transmits a predetermined instruction on the host-peripheral interface which, when received by the scanner 40, causes the scanner 40 to reconfigure itself to use the second protocol. The predetermined instruction may be, for example, an instruction to set and clear LEDs for Num Lock, Caps Lock and Scroll Lock in a predetermined pattern. The scanner 40 will respond to the instruction, because it enumerated as a "USB HID keyboard wedge device." In a preferred embodiment, the pattern lasts only approximately 500ms. However, the driver may continue re-initiating the pattern until the scanner 40 detects it.

Additionally, because the instruction may be transmitted on the USB bus, any other USB HID keyboard wedge device, e.g., the keyboard 35, may respond to the instruction. That is, while the scanner 40 responds to the instruction by reconfiguring itself, the keyboard 35 responds by setting and clearing its LEDs in the predetermined pattern. Those of skill in the art will understand that the instruction may be one or more actions which would be interpreted by the scanner 40 as an instruction to switch communication protocols. Preferably, the instruction is innocuous, such as one or more used and/or unused, supported and/or unsupported keyboard directives (e.g., one or more LED blinks) or HID usages, etc. to minimalize the employee involvement in the installation and configuration of the scanner 40.

In an alternative exemplary embodiment, a driver may include intelligence to recognize vendor-specific peripheral devices which enumerate on the USB bus. The driver only transmits the instruction when the vendor-specific peripheral device enumerates on the USB bus. For example, when the peripheral device enumerates as a "Company A USB HID keyboard wedge device", the driver transmits the instruction. In this embodiment, the driver may refrain from transmitting the instruction each time a peripheral device that is not manufactured by Company A enumerates on the USB bus.

In step 220, the scanner 40 receives the instruction and reconfigures itself to utilize the second protocol. In this manner, the scanner 40 re-enumerates on the USB bus as a device which utilizes the second protocol. That is, re-enumeration data indicative of the second protocol may be included in the device-class, device-subclass and/or device-protocol fields. Additionally, the scanner 40 may reboot after reconfiguration, and, as such, subsequently enumerates on the USB bus of the register 30 (or any other host device) as a peripheral device using the second protocol. Thus, the driver(s) does not have to transmit the instruction each time the scanner 40 is coupled to the register 30 (or any other host device).

In step 225, the register 30 establishes a communication link with the scanner 40 according to the second protocol. In optional step 230, the driver may reset any peripheral devices on the USB bus to a pre-instruction condition. As explained above, the keyboard 35 may have responded to the instruction by setting and clearing its LEDs. Thus, to minimalize employee confusion, the driver may reset the LEDs to the pre-instruction condition.

In another optional step 235, the register 30 may download settings to the scanner 40. In this embodiment, a Remote Management Mechanism may be enabled. For example, if the register 30 is located in a Pharmacy within the retail store, the settings may include a setting for scanning pharmacy bar codes. If this same scanner 40 is removed from the register 30 and attached to a further host device in a warehouse, the settings of the scanner 40 may be reconfigured by the further host device for warehouse operation.

Those of skill in the art will understand that the present invention may enable automated out-of-the-box setup of a peripheral device. This setup may reduce and/or eliminate manual staging or barcode scanning conventionally required for installing and configuring the peripheral device. Also, the present invention allows non-technical personnel to install and configure peripheral devices on the host device they are using.

The present invention may also eliminate several costs associated with manual staging. For example, upon an unsuccessful attempt to install and configure the peripheral device, untrained personnel may return the peripheral device to a manufacturer for replacement or repair. In actuality, the peripheral device is in proper working order and simply has not been configured properly. The cost of configuration in a staging facility is also reduced and/or eliminated. The present invention further reduces a spares pool. That is, different peripheral device hardware configurations for each software application used by the retail store may no longer be required.

The scope of the invention is defined by the appended claims.

## Claims

1. A method (200) of configuring a peripheral device, the method comprising:
detecting (205), by a host device (30), a coupling of the peripheral device (40) to the host device (30);
identifying (210), by the host device (30), enumeration data provided by the peripheral device indicative of a universal serial bus, USB, human interface device, HID, keyboard device using a first communication protocol;
sending, by the host device via the first communication protocol, predetermined instructions to the peripheral device, the predetermined instructions being responsively readable by a USB HID keyboard device;
responsively to receiving the predetermined instructions, reconfiguring the peripheral device to communicate with the host device via a second communication protocol.

2. The method (200) according to claim 1, further comprising: establishing a communication link between the host device (30) and the peripheral device (40) via the second communication protocol.

3. The method (200) according to claim 1, further comprising: identifying, by the host device, re-enumeration data provided by the peripheral device via the second communication protocol.

4. The method (200) according to claim 1, wherein the peripheral device (40) is a barcode scanner.

## Patentansprüche

1. Verfahren (200) zum Konfigurieren einer Peripherievorrichtung, wobei das Verfahren umfasst:
Erfassen (205), durch eine Hostvorrichtung (30), einer Kopplung der Peripherievorrichtung (40) mit der Hostvorrichtung (30);
Identifizieren (210), durch die Hostvorrichtung (30), von Aufzählungsdaten, die von der Peripherievorrichtung bereitgestellt werden und die indikativ sind für eine Tastaturvorrichtung mit universellem seriellen Bus (USB) mit menschlicher Schnittstellenvorrichtung (HID), unter Verwendung eines ersten Kommunikationsprotokolls;
Senden, durch die Hostvorrichtung, von vorbestimmten Anweisungen über das erste Kommunikationsprotokoll an die Peripherievorrichtung, wobei die vorbestimmten Anweisungen von einer USB-HID-Tastaturvorrichtung antwortend lesbar sind;
als Reaktion auf das Empfangen der vorbestimmten Anweisungen, Rekonfigurieren der Peripherievorrichtung, um über ein zweites Kommunikationsprotokoll mit der Hostvorrichtung zu kommunizieren.

2. Verfahren (200) nach Anspruch 1, ferner umfassend: Herstellen einer Kommunikationsverbindung zwischen der Hostvorrichtung (30) und der Peripherievorrichtung (40) über das zweite Kommunikationsprotokoll.

3. Verfahren (200) nach Anspruch 1, ferner umfassend: Identifizieren, durch die Hostvorrichtung, von Wiederaufzählungsdaten, die von der Peripherievorrichtung über das zweite Kommunikationsprotokoll bereitgestellt werden.

4. Verfahren (200) nach Anspruch 1, wobei die Peripherievorrichtung (40) ein Barcodescanner ist.

## Revendications

1. Procédé (200) de configuration d'un dispositif périphérique, ce procédé comprenant :
la détection (205), par un dispositif hôte (30), d'un couplage du dispositif périphérique (40) au dispositif hôte (30) ;
l'identification (210), par le dispositif hôte (30) ; de données d'énumération fournies par le dispositif périphérique et indicatives d'un dispositif de clavier à interface humaine HID à bus sériel universel USB, utilisant un premier protocole de communication ;
l'envoi, par le dispositif hôte, via le premier protocole de communication, d'instructions prédéterminées au dispositif périphérique, les instructions prédéterminées étant lisibles avec possibilité de réponse par un dispositif de clavier HID à USB ;
en réponse à la réception des instructions prédéterminées, reconfiguration du dispositif périphérique pour communiquer avec le dispositif hôte via un second protocole de communication.

2. Procédé (200) selon la revendication 1, comprenant en outre : l'établissement d'un lien de communication entre le dispositif hôte (30) et le dispositif périphérique (40) via le second protocole de communication.

3. Procédé (200) selon la revendication 1, comprenant en outre : l'identification, par le dispositif hôte, des données de ré-énumération fournies par le dispositif périphérique via le second protocole de communication.

4. Procédé (200) selon la revendication 1, dans lequel le dispositif périphérique (40) est un scanner de codes-barres.
